(19) Europäisches Patentamt
European Patent Office
Office européen des brevets

(11) EP 0 787 761 A1

(12) DEMANDE DE BREVET EUROPEEN

(43) Date de publication:
**06.08.1997 Bulletin 1997/32**

(51) Int Cl.[6]: **C08J 5/18**
// C08L77:00, C08L23:02

(21) Numéro de dépôt: **97400086.1**

(22) Date de dépôt: **16.01.1997**

(84) Etats contractants désignés:
**AT BE CH DE DK ES FI FR GB GR IE IT LI LU NL PT SE**

(30) Priorité: **31.01.1996 FR 9601145**

(71) Demandeur: **ELF ATOCHEM S.A.**
**92800 Puteaux (FR)**

(72) Inventeurs:
- **Alex, M. Patrick**
**91470 Limours Pecqueuse (FR)**
- **Melot, M. Denis**
**27300 Bernay (FR)**

(74) Mandataire: **Neel, Henry et al**
**Elf Atochem S.A.,**
**Dept. Propriété Industrielle,**
**La Défense 10,**
**Cedex 42**
**92091 Paris La Défense (FR)**

# (54) Films a base de polyamides et de polyoléfines

(57) L'invention concerne des films constitués de compositions comprenant :

- au moins un polyamide (A) ;
- au moins un polymère (B) comprenant des blocs polyamide et des blocs polyéther
- au moins une polyoléfine (C) ;
- au moins une polyoléfine fonctionnalisée (D)

et telles que la résistance à l'impact (DART TEST) est supérieure à celle d'un film contenant les mêmes proportions de (A), (C) et (D) mais ne contenant pas (B).

EP 0 787 761 A1

## Description

La présente invention concerne des films constitués de compositions à base de polyamides et de polyoléfines et plus particulièrement des compositions comprenant :

- au moins un polyamide (A)
- au moins un polymère (B) comprenant des blocs polyamides et des blocs polyéther
- au moins une polyoléfine (C)
- au moins une polyoléfine fonctionnalisée (D)

et tels que la résistance à l'impact (DART TEST) est supérieure à celle d'un film contenant les mêmes proportions de (A), (C) et (D) mais ne contenant pas (B).

Les compositions de l'invention peuvent être aussi caractérisées par une structure à matrice polyamide, c'est-à-dire qu'elles conservent l'essentiel des propriétés des polyamides.

L'art antérieur JP 04-314 741 décrit des films constitués d'un mélange de (i) polyamide 6 et (ii) de polyétheresteramide. Le polyétheresteramide est un polymère bloc obtenu par la condensation de polyoxytetraméthylèneglycol et de blocs polyamides à extrémités acide carboxylique. Les blocs polyamides proviennent du polycaprolactame (PA-6) ou du polydodécalactame (PA-12). La quantité de polyétheresteramide est comprise entre 0,5 et 9 % en poids du mélange.

La propriété de ce film est de résister à la pliure à 0° C selon la méthode 101 c de la norme MIL-B-131 F. On mesure le nombre de trous produits au cours de 1 000 pliages.

Si la quantité de polyétheresteramide est trop faible, le perçage est important, si la quantité de polyétheresteramide est trop importante, on réduit la transparence et les propriétés mécaniques du film.

Dans cet art antérieur; le polyétheresteramide est tel que les proportions en poids des blocs polyamides et des blocs polyéthers sont dans le rapport 45/55 à 30/70.

Il est utile que les films de polyamide qu'on utilise dans l'industrie alimentaire présentent une bonne résistance au pliage notamment à basse température pour l'emballage des surgelés. Cependant, il est indispensable que les films pour emballer les produits surgelés (ou à surgeler) résistent à la perforation due aux parties saillantes ou aux arêtes vives de ces produits. Il est aussi utile qu'au cours du transport du produit surgelé et de sa manipulation, les dites parties saillantes et les arêtes vives ne provoquent pas un perçage du film

Cette propriété est aussi recherchée pour l'emballage de matériel médical stérilisé. En effet, le perçage du film provoquerait une entrée d'air et donc une contamination. La demanderesse a trouvé que le test le plus représentatif de cette résistance était la résistance à l'impact (DART TEST) d'un poinçon tombant d'une certaine hauteur sur le film.

Les essais de DART TEST peuvent se faire selon la méthode A ou la méthode B.

Les films de l'invention présentent aussi une résistance à la déchirure améliorée par comparaison avec les films contenant les mêmes proportions de (A), (C) et (D) mais ne contenant pas (B), que cette déchirure soit dans le sens parallèle ou perpendiculaire à l'extrusion.

On entend par polyamide (A) les produits de condensation :

- d'un ou plusieurs aminoacides, tels les acides aminocaproïques, amino-7-heptanoïque, amino-11-undécanoïque et amino-12-dodécanoïque d'un ou plusieurs lactames tels que caprolactame, oenantholactame et lauryllactame ;
- d'un ou plusieurs sels ou mélanges de diamines telles l'hexaméthylènediamine, la dodécaméthylènediamine, la métaxylyènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique;

ou des mélanges de certains de ces monomères ce qui conduit à des copolyamides, par exemple le PA-6/12 par condensation du caprolactame et du lauryllactame.

On peut utiliser des mélanges de polyamide. On utilise avantageusement le PA-6 et le PA-6,6.

Les polymères à blocs polyamides et blocs polyéthers résultent de la copolycondensation de séquences polyamides à extrémités réactives avec des séquences polyéthers à extrémités réactives, telles que, entre autres :

1) Séquences polyamides à bouts de chaîne diamines avec des séquences polyoxyalkylènes à bouts de chaînes dicarboxyliques.
2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatique appelées polyétherdiols.
3) Séquences polyamides à bouts de chaînes dicarboxyliques avec des polyétherdiols, les produits obtenus étant,

dans ce cas particulier, des polyétheresteramides

Les séquences polyamides à bouts de chaînes dicarboxyliques proviennent, par exemple, de la condensation d'acides alpha-oméga aminocarboxyliques de lactames ou de diacides carboxyliques et diamines en présence d'un diacide carboxylique limiteur de chaîne. Avantageusement, les blocs polyamides sont en polyamide-12.

La masse molaire en nombre $\overline{M}_n$ des séquences polyamides est comprise entre 300 et 15 000 et de préférence entre 600 et 5 000. La masse $\overline{M}_n$ des séquences polyéther est comprise entre 100 et 6 000 et de préférence entre 200 et 3 000.

Les polymères à blocs polyamides et blocs polyéthers peuvent aussi comprendre des motifs répartis de façon aléatoire. Ces polymères peuvent être préparés par la réaction simultanée du polyéther et des précurseurs des blocs polyamides.

Par exemple, on peut faire réagir du polyétherdiol, un lactame (ou un alpha-oméga amino acide) et un diacide limiteur de chaîne en présence d'un peu d'eau. On obtient un polymère ayant essentiellement des blocs polyéthers, des blocs polyamides de longueur très variable, mais aussi les différents réactifs ayant réagi de façon aléatoire qui sont répartis de façon statistique le long de la chaîne polymère.

Ces polymères à blocs polyamides et blocs polyéthers qu'ils proviennent de la copolycondensation de séquences polyamides et polyéthers préparées auparavant ou d'une réaction en une étape présentent, par exemple, des duretés shore D pouvant être comprises entre 20 et 75 et avantageusement entre 30 et 70 et une viscosité intrinsèque entre 0,8 et 2,5 mesurée dans le métacrésol à 25° C.

Que les blocs polyéthers dérivent du polyéthylène glycol, du polyoxypropylène glycol ou du polyoxytetraméthylène glycol, ils sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. Ils peuvent être aussi mélangés avec des précurseurs de polyamide et un limiteur de chaîne pour faire les polymères à blocs polyamides et blocs polyéthers ayant des motifs répartis de façon statistique.

Des polymères à blocs polyamides et polyéthers sont décrits dans les brevets US 4 331 786, US 4 115 475, US 4 195 015, US 4 839 441, US 4 864 014, US 4 230 838 et US 4 332 920.

Le polyéther peut être par exemple un polyéthyléne glycol (PEG), un polypropylène glycol (PPG) ou un polytétra méthylène glycol (PTMG) Ce dernier est aussi appelé polytétrahydrofurane (PTHF).

Que les blocs polyéther soient introduits dans la chaîne du polymère à blocs polyamides et blocs polyéther sous forme de diols ou de diamines, on les appelle par simplification blocs PEG ou blocs PPG ou encore blocs PTMG.

On ne sortirait pas du cadre de l'invention si les blocs polyéther contenaient des motifs différents tels que des motifs dérivés de l'éthylène glycol ($-OC_2H_4-$), du propylène glycol

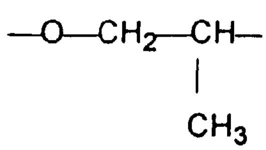

ou encore du tétraméthylène glycol ($-O-(CH_2)_4-$).

De préférence, les blocs polyamide comprennent les mêmes motifs que le polyamide (A).

De préférence, le polymère à blocs polyamides et blocs polyéther comprend un seul type de bloc polyamide et un seul type de blocs polyéther. On utilise avantageusement des polymères à blocs PA-6 et blocs PTMG.

On peut aussi utiliser un mélange de deux polymères à blocs polyamides et blocs polyéther.

Avantageusement, le polymère à blocs polyamides et blocs polyéthers est tel que le polyamide est le constituant majoritaire en poids, c'est-à-dire que la quantité de polyamide qui est sous forme de blocs et celle qui est éventuellement répartie de façon statistique dans la chaîne représente 50 % en poids ou plus du polymère à blocs polyamide et blocs polyéther. Avantageusement, la quantité de polyamide et la quantité de polyéther sont dans le rapport (polyamide/polyéther) 50/50 à 80/20.

De préférence, les blocs polyamides et les blocs polyéther d'un même polymère (B) ont respectivement des masses Mn 1000/1000, 1300/650, 2000/1000, 2 600/650 et 4 000/1 000.

La polyoléfine (C) est un polymère comprenant des motifs oléfines tels que par exemple des motifs éthylène, propylène, butène-1, ou tout autre alpha oléfine. A titre d'exemple, on peut citer :

- les polyéthylènes tels que les LDPE, HDPE, LLDPE ou VLDPE, le polypropylène, les copolymères éthylène / propylène, les EPR (éthylène / propylène Rubber) ou encore les PE métallocènes,
- les copolymères blocs styrène / éthylène-butène / styrène (SEBS), les copolymères blocs styrène / butadiène / styrène (SBS), les copolymères blocs styrène / isopréne / styrène (SIS), les copolymères blocs styrène / éthylènepropylène / styrène, les éthylène / propylène / diène (EPDM)

- les copolyméres de l'éthylène avec au moins un produit choisi parmi les sels ou les esters d'acides carboxyliques insaturés, ou les esters vinyliques d'acides carboxyliques saturés.

Avantageusement, la polyoléfine (C) est choisie parmi le LLDPE, le VLDPE, le polypropylène, les copolymères éthylène / acétate de vinyle ou les copolymères éthylène / (méth)acrylate d'alkyle. La densité peut être avantageusement comprise entre 0,86 et 0,965, le Melt Flow index (MFI) peut être compris entre 0,3 et 40.

La polyoléfine fonctionnalisée (D) est un polymère comprenant des motifs alpha oléfine et des motifs epoxyde ou acide carboxylique ou anhydride d'acide carboxylique.

A titre d'exemple, on peut citer les polyoléfines (C) précédentes greffées par des epoxydes insaturés tels que le (méth)acrylate de glycidyle, ou par des acides carboxyliques tels que l'acide (méth)acrylique ou encore par des anhydrides d'acides carboxyliques insaturés tels que l'anhydride maléique.

On peut encore citer :

- les copolymères de l'éthylène, d'un epoxyde insaturé et éventuellement d'un ester ou un sel d'acide carboxylique insaturé ou d'un ester vinylique d'acide carboxylique saturé. Ce sont par exemple les copolymères éthylène / acétate de vinyle / (méth)acrylate de glycidyle ou les copolymères éthylène / (méth)acrylate d'alkyle / (méth)acrylate de glycidyle.
- les copolymères de l'éthylène d'un anhydride d'acide carboxylique insaturé et/ou d'un acide carboxylique insaturé pouvant être partiellement neutralisé par un métal (Zn) ou un alcalin (Li) et éventuellement d'un ester d'acide carboxylique insaturé ou d'un ester vinylique d'acide carboxylique saturé. Ce sont par exemple les copolymères éthylène / acétate de vinyle / anhydride maléique ou les copolymères éthylène / (méth)acrylate d'alkyle / anhydride maléique ou encore les copolymères éthylène / (méth)acrylate de Zn ou Li/anhydride maléique.
- le polyéthylène, le polypropylène, les copolymères éthylène propylène greffés ou copolymérisés avec un anhydride d'acide carboxylique insaturé puis condensés avec un polyamide (ou un oligomère de polyamide) monoaminé. Ces produits sont décrits dans EP 342 066.

Avantageusement, la polyoléfine fonctionnalisée (D) est choisie parmi les copolymères éthylène / (méth)acrylate d'alkyle / anhydride maléique, les copolymères éthylène / acétate de vinyle / anhydride maléique, les copolymères éthylène propylène majoritaires en propylène greffés par de l'anhydride maléique puis condensés avec du polyamide 6 monoaminé ou des oligomères monoaminés de caprolactame.

De préference, (D) est un copolymère éthylène /(méth)acrylate d'alkyle / anhydride maléique comprenant jusqu'à 40 % en poids de (méth)acrylate d'alkyle et jusqu'à 10 % en poids d'anhydride maléique.

Le (méth)acrylate d'alkyle peut être choisi parmi l'acrylate de méthyle, l'acrylate d'éthyle, l'acrylate de n-butyle, l'acrylate d'isobutyle, l'acrylate d'éthyl-2-hexyle, l'acrylate de cyclohexyle, le méthacrylate de méthyle et le méthacrylate d'éthyle.

Avantageusement, les proportions en poids des différents constituants sont :

$50\ \% \leq A + B \leq 80\ \%$ et $20\ \% \leq C + D \leq 50\ \%$, le total étant 100 %.

Selon une autre forme de l'invention, les proportions de A + B sont telles que

$0{,}06 \leq A / B \leq 15$ et de préference $0{,}5 \leq A/B \leq 15$.

La quantité de (D) dépend du nombre de fonctions qu'il porte et de leur réactivité.

Si (D) porte peu de fonctions, il en faut une quantité plus importante.

S'agissant de copolymères ayant de 1 à 10 % en poids d'anhydride maléique de méthacrylate de glycidyle ou d'acide (méth)acrylique D peut être tel que

$0{,}1 \leq D/C \leq 0{,}5$.

Des compositions particulièrement préférées sont telles que :

$55\ \% \leq A + B \leq 80\ \%$ $\quad 20\ \% \leq C + D \leq 45\ \%$

le total étant 100 %

$0{,}5 \leq A/B \leq 15$

$0{,}2 \leq D/C \leq 0{,}4$

(A) étant le PA6 ou le PA-6,6

(B) étant un copolymère à blocs PA-6 et blocs PTMG

(C) un VLDPE

(D) un copolymère éthylène / (méth)acrylate d'alkyle / anhydride maléique

D'autres compositions préférées sont telles que :

les proportions de (A), (B), (C) et (D) sont les mêmes que ci-dessus et :

(A) étant le PA-6 ou le PA-6,6
(B) étant un copolymère à blocs PA-6 et blocs PTMG
(C) le polypropylène
(D) un copolymère éthylène propylène majoritaire en polypropylène, greffé par de l'anhydride maléique puis condensé avec du Polyamide 6 monoaminé ou des oligomères monoaminés de caprolactame.

Ces compositions de l'invention peuvent aussi comprendre des charges, des ignifugeants, des agents glissants ou antiblocants, des anti oxydants, des anti U.V.

On prépare ces compositions par mélange à l'état fondu (bi vis, BUSS monovis) selon les techniques habituelles des thermoplastiques

La demanderesse a aussi découvert que les films fabriqués avec les compositions de l'invention avaient une très bonne résistance au choc et au pliage.

Le film de l'invention peut être préparé par mélange des produits (A) à (D) à l'état fondu suivi d'une extrusion soufflage ou d'une extrusion en filière plate et cylindre. La résistance à l'impact augmente avec la quantité de (B).

L'épaisseur des films peut être comprise entre 10 et 300 µm.

La demanderesse a découvert que les compositions pour fabriquer les films de l'invention peuvent être obtenues dans l'extrudeuse qui alimente le dispositif de fabrication du film.

Il suffit d'alimenter l'extrudeuse avec les produits (A), (B), (C) et (D) sans qu'il soit nécessaire de les malaxer auparavant ou de préparer des mélanges maîtres.

***Exemples***

Dans les exemples suivants, on désigne par:

PA 6: un polyamide 6 de MFI compris entre 17 et 20 (sous 235° C /2,16 kg)

PEBAX 1 : un copolymère à blocs PA-6 de $M_n$ 1 300 et blocs PTMG de $M_n$ 650 ayant une dureté shore D de 56 et une viscosité intrinsèque de 1,38 mesurée dans le méta crésol à 25 ° C pour une concentration initiale de 0,8 g/100 ml.

VLDPE: un polymère de très basse densité 0,900 et MFI 0,8 (190° C-2,16 kg).

Lotader 1 : un copolymère éthylène / acrylate de butyle / anhydride maléique de composition en poids 90,9 / 6 / 3,1 et de MFI 5 (190° C - 2,16 kg).

PP: un polypropylène de MFi 1,5 - 2 (235° C - 2,16 kg)

TC: un copolymère tronc éthylène / propylène à 12 % en poids d'éthylène greffé par l'anhydride maléique (1 % MAH par rapport au tronc) puis condensé avec un oligomère mono aminé de caprolactame de degré de polymérisation 22, la quantité de ces oligomères étant de 25 % par rapport au tronc.

***Exemple 1 à 9***

On a fabriqué des films d'épaisseur 55 µm. La composition est reportée sur le tableau 1. Les proportions sont en poids.

Ces films ont été conditionnés 48 heures à 23° C dans une atmosphère à 50 % d'humidité relative (RH).

Les essais sont reportés sur les tableaux 2, 3, 4.

Tableau 1

| | **1** | **2** | **3** | **4** | **5** | **6** | **7** | **8** | **9** |
|---|---|---|---|---|---|---|---|---|---|
| **PA6** | 100 | 65 | 62 | 58,5 | 55,5 | 65 | 58,5 | 52 | 45,5 |
| **PEBAX 1** | | | 5 | 10 | 15 | | 10 | 20 | 30 |
| **PP** | | | | | | 27 | 24 | 21,5 | 19 |
| **VLDPE** | | 25 | 23,5 | 22,5 | 21 | | | | |
| **TC** | | | | | | 8 | 7,5 | 6,5 | 5,5 |

Tableau 1 (continued)

| | **1** | **2** | **3** | **4** | **5** | **6** | **7** | **8** | **9** |
|---|---|---|---|---|---|---|---|---|---|
| **LOTADER 1** | | 10 | 9,5 | 9 | 8,5 | | | | |
| Σ | 100 | 100 | 100 | 100 | 100 | 100 | 100 | 100 | 100 |

Tableau 2

| Exemples | | 1 | 2 | | 3 | | 4 | | 5 | |
|---|---|---|---|---|---|---|---|---|---|---|
| DART TEST | | | | | | | | | | |
| (méthode B - h 1.5m) | | | | | | | | | | |
| Masse | g | | 1 100 | | 1 250 | | 1 600 | | 1 600 | |
| | | | | | | | | | | |
| P mini 100 % non casse | g | | 845 | | 1145 | | 1495 | | 1625 | |
| P maxi 100 % casse | g | | 1245 | | 1595 | | 1845 | | 1845 | |
| | | | | | | | | | | |
| | | | | | | | | | | |
| DECHIRURE | | | | | | | | | | |
| (ASTM D 1922-67) | | | | | | | | | | |
| Résistance sens paral. | cN | 64 | 60 | 3 | 65 | 14 | 66 | 4 | 77 | 14 |
| Valeur mini | cN | | 56 | | 52 | | 60 | | 60 | |
| Valeur maxi | cN | | 64 | | 104 | | 72 | | 104 | |
| | | | | | | | | | | |
| Résistance sens perp. | cN | 67 | 108 | 5 | 127 | 7 | 144 | 14 | 126 | 4 |
| Valeur maxi | cN | | 100 | | 116 | | 128 | | 120 | |
| Valeur maxi | cN | | 116 | | 140 | | 176 | | 132 | |
| | | | | | | | | | | |

Tableau 3

| Exemples | | 1 | 2 | | 3 | | 4 | | 5 | |
|---|---|---|---|---|---|---|---|---|---|---|
| Essai TRACTION | | | | | | | | | | |
| (ISO R527 1B) | | | | écart | | écart | | écart | | écart |
| | | | | | | | | | | |
| | | | | | | | | | | |
| Sens parallèle | | | | | | | | | | |
| % Seuil | % | 19 | 15.5 | 0.5 | 27.2 | 1 | 27.7 | 2 | 26.3 | 1 |
| C Seuil | MPa | 31 | 28.5 | 0.5 | 31.2 | 0.5 | 29.7 | 0.7 | 35.6 | 36 |
| % Rupture | % | 288 | 335 | 24 | 325 | 9 | 330 | 23 | 330 | 14 |
| C Rupture | MPa | 71 | 47 | 4 | 59 | 2 | 61 | 7 | 66 | 6 |
| | | | | | | | | | | |
| Sens perpendiculaire | | | | | | | | | | |
| % Seuil | % | 12 | 25.4 | 3 | 17.9 | 2 | 14.6 | 1.7 | 13.2 | 2 |
| C Seuil | MPa | 29.1 | 0.8 | 29.9 | 0.2 | 0.2 | 33.1 | 0.3 | 33.1 | 24 |
| % Rupture | % | 300 | 305 | 22 | 325 | 40 | 370 | 10 | 360 | 25 |
| C Rupture | MPa | 67 | 52 | 4 | 48 | 6 | 60 | 2 | 62 | 2 |
| | | | | | | | | | | |

Tableau 4

| PROPRIETES MECANIQUES DES FILMS APRES 48 HEURES DE CONDITIONNEMENT A TEMPERATURE AMBIANTE et 50 % HUMIDITE RELATIVE | | | | | | |
|---|---|---|---|---|---|---|
| NORME | Exemples<br>ESSAI | UNITE | 6 | 7 | 8 | 9 |
| NFT 54-141 | RESISTANCE A LA DECHIRURE<br>RAYON CONSTANT<br>Sens // à l'extrusion<br>sens ⊥ à l'extrusion | <br><br>N<br>N | <br><br>0.74 s = 0.2<br>* 0.64 s = 0.0 | <br><br>1.10 s = 0.44<br>0.84 s = 0.11 | <br><br>1.41 s = 0.50<br>1.20 s = 0.14 | <br><br>0.89 s = 0.40<br>1.03 s = 0.07 |
| NFT 54-109 | DART TEST<br>Méthode A (66 cm) | g | 65 | 194 | 253 | 396 |
| bandelette<br>l = 15 mm<br>v = 500 mm/mn<br>lo = 50 mm | TRACTION<br>sens parallèle<br>Contrainte à la rupture<br>Allongement à la rupture | <br><br>N<br>% | <br><br>68.7 = 4.4<br>545 s = 24 | <br><br>68.1 s = 8.3<br>590 s = 54 | <br><br>78.9 s = 6.1<br>652 s = 33 | <br><br>65.9 s = 2.9<br>633 s = 13 |
| bandelette<br>l = 15 mm<br>v = 500 mm/mn<br>lo = 50 mm | TRACTION<br>sens perpendiculaire<br>Contrainte à la rupture<br>Allongement à la rupture | <br><br>N<br>% | <br><br>57.2 s = 1.9<br>524 s = 19 | <br><br>60.1 s = 3.7<br>590 s = 30 | <br><br>59.1 s = 2.9<br>610 s = 24 | <br><br>56.2 s = 1.9<br>619 s = 17 |

* 7 échantillons sur 10 se déchirent hors du rayon constant.

**Revendications**

1. Films constitués de compositions comprenant :

   - au moins un polyamide (A);
   - au moins un polymère (B) comprenant des blocs polyamide et des blocs polyéther
   - au moins une polyoléfine (C) ;
   - au moins une polyoléfine fonctionnalisée (D),

   et tels que la résistance à l'impact (DART TEST) est supérieure à celle d'un film contenant les mêmes proportions de (A), (C) et (D) mais ne contenant pas (B).

2. Films selon l'une quelconque des revendications précédentes dans lesquelles (A) est le PA-6 ou le PA-6,6.

3. Films selon l'une quelconque des revendications précédentes dans lesquelles (B) est un copolymère à blocs PA-6 et blocs PTMG.

4. Films selon l'une quelconque des revendications précédentes dans lesquelles (C) est choisie parmi le LLDPE, le VLDPE, le polypropylène, les copolymères éthylène / acétate de vinyle ou les copolymères éthylène /(méth)acrylate d'alkyle.

5. Films selon l'une quelconque des revendications précédentes dans lesquelles (D) est choisi parmi les copolymères éthylène / (méth)acrylate d'alkyle / anhydride maléique, les copolymères éthylène / acétate de vinyle / anhydride maléique ou les copolymères éthylène propylène majoritaires en propylène greffés par de l'anhydride maléique puis condensés avec du polyamide 6 monoaminé ou des oligomères mono aminés de caprolactame.

6. Films selon l'une des revendications précédentes dans lesquelles
   50 % $\leq$ A + B $\leq$ 80 %
   20 % $\leq$ C + D $\leq$ 50 %
   le total étant 100 % (en poids)

7. Films selon la revendication 6 dans lesquelles (en poids) :
   0,06 $\leq$ A/ B $\leq$ 15 et de préférence 0,5 $\leq$ A/B $\leq$ 12

8. Films selon la revendication 6 ou 7 dans lesquelles en poids :
   0,1 $\leq$ D/C $\leq$ 0,5

9. Films selon l'une quelconque des revendications 1 à 5 dans lesquelles :
   55 % $\leq$ A + B $\leq$ 80 %
   20 % $\leq$ C + D $\leq$ 45 %
   le total étant 100 %
   0,5 $\leq$ A/B $\leq$ 15
   0,2 $\leq$ D/C $\leq$ 0,4

   (A) étant le PA-6 ou le PA-6,6
   (B) étant un copolymère à blocs PA-6 et blocs PTMG
   (C) un VLDPE
   (D) un copolymère éthylène /(méth)acrylate d'alkyle / anhydride maléique

10. Films selon l'une quelconque des revendications 1 à 5 dans lesquelles :
    55 % $\leq$ A + B $\leq$ 80
    20 % $\leq$ C + D $\leq$ 45
    Le total étant 100 %
    et 0,5 $\leq$ A/B $\leq$ 15
    0,2 $\leq$ D/C $\leq$ 0,4

    (A) étant le PA-6 ou le PA-6,6
    (B) étant un copolymère à blocs PA-6 et blocs PTMG

(C) le polypropylène
(D) un copolymère éthylène propylène majoritaire en propylène, greffé par de l'anhydride maléique puis condensé avec du polyamide-6 mono aminé ou des oligomères mono aminés de caprolactame.

Office européen des brevets

# RAPPORT DE RECHERCHE EUROPEENNE

Numero de la demande
EP 97 40 0086

| DOCUMENTS CONSIDERES COMME PERTINENTS | | | |
|---|---|---|---|
| Catégorie | Citation du document avec indication, en cas de besoin, des parties pertinentes | Revendication concernée | CLASSEMENT DE LA DEMANDE (Int.Cl.6) |
| X<br>Y | EP 0 559 284 A (ENICHEM POLIMERI)<br>* le document en entier * | 1-9<br>10 | C08J5/18<br>//C08L77:00,<br>C08L23:02 |
| X<br><br><br><br><br><br><br>Y | DATABASE WPI<br>Section Ch, Week 9336<br>Derwent Publications Ltd., London, GB;<br>Class A17, AN 93-285511<br>XP002017333<br>& JP 05 202 239 A (TORAY IND INC) , 10 Août 1993<br>* abrégé * | 1-9<br><br><br><br><br><br><br>10 | |
| Y | EP 0 342 066 A (ATOCHEM ELF SA)<br>* le document en entier * | 10 | |
| A | DATABASE WPI<br>Section Ch, Week 9340<br>Derwent Publications Ltd., London, GB;<br>Class A23, AN 93-317694<br>XP002017334<br>& JP 05 230 365 A (TORAY IND INC) , 7 Septembre 1993<br>* abrégé * | | DOMAINES TECHNIQUES RECHERCHES (Int.Cl.6)<br>C08J |
| A | CH 655 941 A (INVENTA AG) | | |
| A | FR 2 519 012 A (ATO CHIMIE) | | |

Le présent rapport a été établi pour toutes les revendications

| Lieu de la recherche | Date d'achèvement de la recherche | Examinateur |
|---|---|---|
| LA HAYE | 12 Mai 1997 | Tarrida Torrell, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)